# DEMANDE DE BREVET EUROPEEN

(11) **EP 2 466 162 A1**
(43) Date de publication de la demande: **20.06.2012**
(21) Numéro de dépôt: 11193837.9
(22) Date de dépôt: 15.12.2011
(51) Int. Cl.: F16D 13/52, F16D 23/12, F16D 27/115, F16H 25/12

(54) **Dispositif de transmission de couple, et boîte de vitesses le comportant**

(30) Priorité: 16.12.2010 FR 1060653
(71) Demandeur: Peugeot Citroën Automobiles SA, 78140 Vélizy Villacoublay (FR)
(72) Inventeur: Lelasseux, Xavier, 92150 Suresnes (FR)

(57) **Abrégé**

Le dispositif de transmission de couple entre des organes rotatifs (2,3) comprend :
- un embrayage à friction comportant deux jeux de disques de friction (6,7) intercalés, mobiles selon une direction axiale des organes rotatifs entre une plaque de butée (8) solidaire du premier organe rotatif et une plaque d'appui (9) mobile selon la direction axiale des organes rotatifs et solidaire en rotation du second organe rotatif ; et
- un mécanisme d'actionnement (12) comportant un organe d'actionnement (19), mobile en rotation et monté coaxialement aux organes rotatifs; un organe (13) de découplage en rotation du mécanisme d'actionnement par rapport aux organes rotatifs; et un organe de conversion comportant :
- des rampes (21,25) réalisées sur une face latérale de l'organe d'actionnement (19) et/ou sur une face latérale d'un organe de butée (24) en regard de la face latérale de l'organe d'actionnement ; et
- des organes de réaction (26) disposés pour coopérer avec les rampes de façon à réaliser un déplacement axial de l'organe d'actionnement lors d'une rotation de l'organe d'actionnement (19), l'organe d'actionnement étant agencé pour que le déplacement axial génère une force sur la plaque d'appui de l'embrayage à friction.

Il peut être mis en oeuvre en reliant l'un des organes rotatifs au pignon de sortie d'une boite de vitesses.

## Description

La présente invention concerne un dispositif de transmission de couple et une boîte de vitesses le comportant.

### ARRIÈRE-PLAN DE L'INVENTION

On connaît, notamment du document EP 1449704 un dispositif de transmission de couple entre deux organes rotatifs coaxiaux comprenant un embrayage à friction comportant un jeu de disques de friction alternés disposés entre une plaque de butée fixée à l'un des organes rotatifs et une plaque d'appui mobile selon une direction axiale des organes rotatifs et solidaire en rotation de l'autre organe rotatif ; et un mécanisme d'actionnement comportant un moteur électrique ayant un rotor associé à une vis sans fin, elle-même associée à une rondelle ressort montée pour assurer une conversion du couple exercé par le moteur en une force axiale sur la plaque d'appui de l'embrayage à friction.

Un tel mécanisme est complexe et donc coûteux. En outre, l'organe de conversion de couple en force est totalement intégré au dispositif de transmission de couple de sorte qu'il n'est pas possible d'adapter le dispositif de transmission de couple à différentes situations en changeant seulement un des composants.

### OBJET DE L'INVENTION

Un but de l'invention et de proposer un dispositif de transmission de couple de structure simple permettant en outre une adaptation facile à différentes situations

### BRÈVE DESCRIPTION DE L'INVENTION

En vue de la réalisation de ce but, on propose selon l'invention un dispositif de transmission de couple entre un premier organe rotatif, et un second organe rotatif coaxial au premier organe rotatif, montés dans un carter, le dispositif comprenant :
- un embrayage à friction comportant un premier jeu de disques de frictions solidaires en rotation du premier organe rotatif, et un second jeu de disques de friction solidaires en rotation du second organe rotatif et intercalés avec les disques de friction du premier jeu de disques de friction, les jeux de disques de friction étant mobiles selon une direction axiale des organes rotatifs entre une plaque de butée solidaire du premier organe rotatif et une plaque d'appui mobile selon la direction axiale des organes rotatifs et solidaire en rotation du second organe rotatif ; et
- un mécanisme d'actionnement comportant un organe d'actionnement, mobile en rotation et monté coaxialement aux organes rotatifs; un organe de découplage en rotation du mécanisme d'actionnement par rapport aux organes rotatifs; et un organe de conversion d'un couple exercé par l'organe d'actionnement en une force axiale sur la plaque d'appui;
   dans lequel l'organe de conversion comporte :
- des rampes réalisées sur une face latérale de l'organe d'actionnement et/ou sur une face latérale d'un organe de butée en regard de la face latérale de l'organe d'actionnement ; et
- des organes de réaction disposés pour coopérer avec les rampes de façon à réaliser un déplacement axial de l'organe d'actionnement lors d'une rotation de l'organe d'actionnement, l'organe d'actionnement étant agencé pour que le déplacement axial génère une force sur la plaque d'appui de l'embrayage à friction.

La démultiplication dépend de l'angle d'inclinaison des rampes. Pour adapter la démultiplication à une application particulière il suffit donc de changer les organes portant les rampes.

Selon une caractéristique avantageuse de l'invention, les organes de réaction comprennent des billes prenant appui sur les rampes en regard. On supprime ainsi tout frottement entre les rampes et les organes de réaction de sorte que le rendement du dispositif de transmission de couple est amélioré.

Selon un autre aspect avantageux de l'invention, l'organe de découplage comprend un roulement à billes monté entre la plaque d'appui de l'embrayage à friction et l'organe d'actionnement. On utilise ainsi une seule rangée de billes pour assurer à découplage en rotation du mécanisme d'actionnement par rapport aux organes rotatifs.

Selon un mode de réalisation préféré de l'invention, le roulement à billes comprend des billes montées entre une bague intérieure et une bague extérieure comprenant :
- une première demi-bague intérieure, solidaire en rotation du second organe rotatif et libre de se déplacer axialement en regard de la plaque d'appui de l'embrayage à friction,
- une seconde demi-bague intérieure, solidaire en rotation du second organe rotatif et ayant une surface latérale externe en butée contre le carter,
- une première demi-bague extérieure formée par l'organe d'actionnement, et
- une seconde demi-bague extérieure immobile en rotation et reliée à l'organe de butée de l'organe de conversion selon une configuration en U de façon qu'un écartement relatif de la paroi latérale de l'organe d'actionnement portant les rampes, et de la surface de butée entraine un rapprochement des deux demi-bagues extérieures.

### BRÈVE DESCRIPTION DES DESSINS

D'autres caractéristiques avantages de l'invention apparaîtront à la lecture de description qui suit d'un mode de réalisation préféré non limitatif de l'invention en relation avec les figures ci-jointes parmi lesquelles :

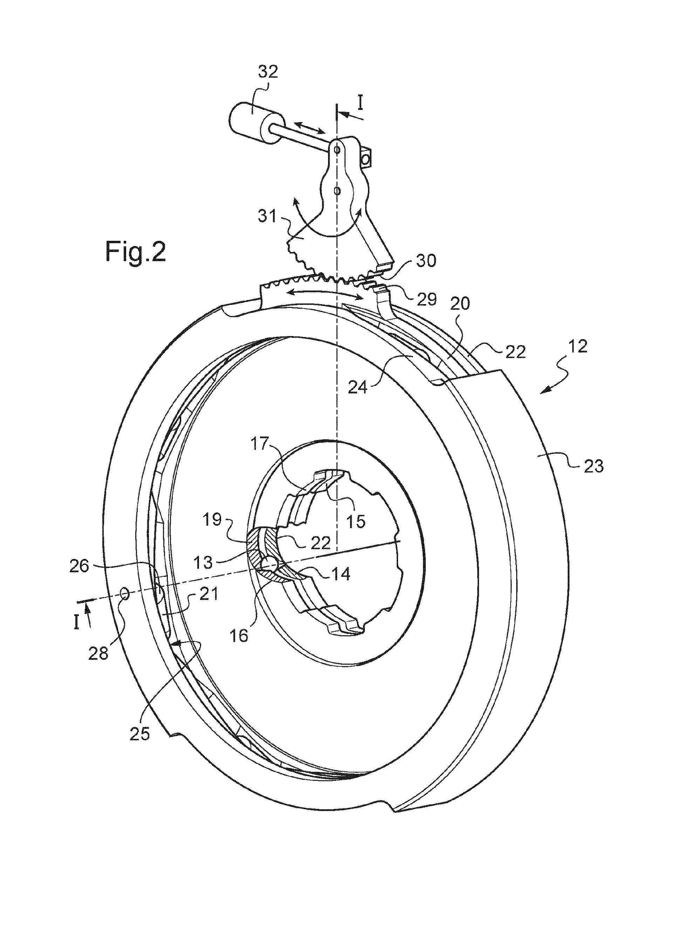

- la figure 1 est une vue en coupe du dispositif de transmission de couple selon l'invention, selon la ligne I-I de la figure 2,
- la figure 2 est une vue en perspective, partiellement écorchée de l'organe de conversion de couple en une force axiale.

### DESCRIPTION DETAILLÉE DE L'INVENTION

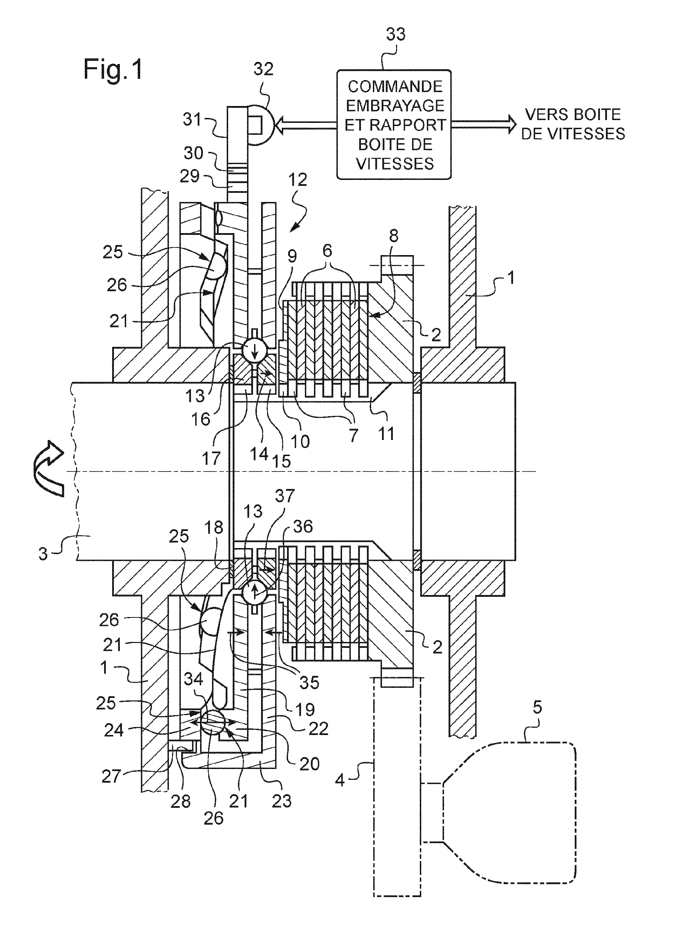

En références aux figures, le dispositif de transmission de couple comporte de façon connue en soi un carter 1, représenté partiellement sur la figure 1, dans lequel sont montés pour tourner un premier organe rotatif 2, et un second organe rotatif 3 coaxial au premier organe rotatif 2. Dans le mode de réalisation illustré le premier organe rotatif est un pignon monté pour engrener avec un pignon de sortie 4 d'une boîte de vitesse 5 représentés de façon symbolique en trait mixte sur la figure 1, et le second organe rotatif 3 est un arbre de roue.

Également de façon connue en soi le dispositif comporte un embrayage à friction comprenant un premier jeu de disques de friction 6 solidaires en rotation du premier organe rotatif et un second jeu de disques de friction 7 solidaires en rotation du second organe rotatif 3 et intercalés avec les disques à friction 6 du premier jeu de disques de friction. Les jeux de disques de friction sont mobiles selon une direction axiale des organes rotatifs entre une plaque de butée 8 du premier organe rotatif, ici une joue du pignon 2, et une plaque d'appui 9, mobile selon la direction axiale des organes rotatifs et solidaire en rotation du second organe rotatif 3 au moyen de dents 10 engagées sur des cannelures 11 du second organe rotatif.

Selon l'invention le dispositif de transmission de couple comporte un mécanisme d'actionnement généralement désigné en 12. Le mécanisme d'actionnement comporte un organe de découplage en rotation du mécanisme d'actionnement par rapport aux organes rotatifs.

Dans le mode de réalisation préféré illustré cet organe de découplage est un roulement à billes comprenant des billes 13 montées entre des bagues comprenant deux demi-bagues intérieures 14 et 16, et deux demi-bagues extérieures 19 et 22.

La première demi-bague intérieure 14 est solidaire en rotation du second organe rotatif 3 et est libre de se déplacer axialement en regard de la plaque d'appui 9 de l'embrayage à friction au moyen de dents 15 engagées sur les cannelures 11.

La seconde demi-bague intérieure 16 est également solidaire en rotation du second organe rotatif 3 au moyen de dents 17 engagées sur les cannelures 11, et a une surface latérale externe en butée contre le carter 1 par l'intermédiaire d'une rondelle d'appui 18.

La première demi-bague extérieure forme un organe d'actionnement. Elle comprend à cet effet une plaque annulaire 19 dont le bord interne forme la demi-bague extérieure du roulement à billes, et elle comporte à sa périphérie externe une couronne 20 s'étendant en saillie sur une face latérale de la plaque 19 opposée aux billes 13. Sur sa face latérale, la couronne 20 comporte des rampes 21 en forme de cuvettes allongées, inclinées par rapport à l'axe des organes rotatifs.

La seconde demi-bague extérieure est formée d'une plaque annulaire 22 dont le bord interne prend appui sur les billes 13 et dont le bord externe est relié par des entretoises en arc de cercle 23 à un organe de butée en forme de couronne 24 ayant une face latérale configurée selon des rampes 25 qui s'étendent en regard des rampes 21 et ont la même inclinaison que les rampes 21.

Des billes 26 formant des organes de réaction sont disposées entre les rampes 21 et 25. La plaque annulaire 22 et la couronne 24 qui lui est associée sont maintenues immobiles en rotation par un pion 27 fixé au carter 1 et engagé de façon flottante dans un perçage 28 de la couronne 24. L'ensemble comprenant la plaque 19, la plaque 22 et la couronne 24 qui lui est associée est ainsi monté flottant et se centre donc automatiquement par rapport aux billes 13.

La plaque d'actionnement 19 est équipée à sa périphérie d'un secteur denté 29 avec lequel coopère un secteur denté 30 d'un organe de manoeuvre pivotant 31 auquel est relié un actionneur 32 commandé par une unité de commande 33 qui commande également le rapport de la boîte de vitesses séquentielle 5. L'actionneur 32 a une première position pour laquelle l'embrayage à friction est embrayé, et une seconde position pour laquelle l'embrayage à friction est débrayé.

Lorsque la plaque d'actionnement 19 est manoeuvrée par l'actionneur 32 dans un sens provoquant une montée des billes 26 le long des rampes 21 et 25,les couronnes 20 et 24 s'écartent l'une de l'autre comme illustré par la flèche en trait épais 34 sur la figure 1.

En raison de la liaison rigide par l'entretoise 23, ce mouvement provoque un rapprochement des plaques 19 et 22 comme illustré par les flèches 35 sur la figure 1.les billes 13 sont alors chassées radialement vers l'intérieur comme illustré par la flèche 36. En raison de la mise en butée de la demi-bague 16, la demi-bague 14 est alors repoussée vers la plaque d'appui comme indiqué par la flèche 37.

Le dispositif de transmission de couple selon l'invention peut être utilisé pour de nombreuses applications, en particulier pour commander un embrayage en relation avec une boîte de vitesses séquentielle, l'organe de commande séquentiel de la boîte de vitesses assurant ainsi une synchronisation des étapes de débrayage, embrayage et changement d'un rapport de boîte de vitesses.

Bien entendu l'invention n'est pas limitée au mode de réalisation décrit et on peut y apporter des variantes de réalisation sans sortir du cadre de l'invention tel que défini par les revendications. En particulier, bien que dans le mode de réalisation préféré illustré il soit prévu de réaliser deux jeux de rampes de même inclinaison sur l'organe d'actionnement et sur la surface de butée en regard, on peut réaliser des rampes avec des inclinaisons différentes ou supprimer les rampes sur l'une des surfaces en regard, la course axiale de la plaque d'appui 9 étant modifiée en conséquence. Bien qu'il soit prévu d'interposer des billes de réactions 26 entre les rampes en regard, ce qui minimise les frottements, on peut également réaliser le dispositif selon l'invention en mettant les rampes directement en contact les unes avec les autres ou en prévoyant des organes de réaction sous forme de nervures sur l'une des surfaces en regard.

On peut également prévoir de transmettre directement le mouvement axial de la plaque 19 à la plaque d'appui 9. Dans ce cas il est nécessaire de mettre la couronne 24 en butée, par exemple en la fixant au carter 1, et d'assurer un découplage en disposant un roulement à billes entre le dos de la plaque 19 et la plaque d'appui 9.

## Revendications

1. Dispositif de transmission de couple entre un premier organe rotatif (2), et un second organe rotatif (3) coaxial au premier organe rotatif, montés dans un carter (1), le dispositif comprenant :
- un embrayage à friction comportant un premier jeu de disques de frictions (6) solidaires en rotation du premier organe rotatif, et un second jeu de disques de friction (7) solidaires en rotation du second organe rotatif et intercalés avec les disques de friction du premier jeu de disques de friction, les jeux de disques de friction étant mobiles selon une direction axiale des organes rotatifs entre une plaque de butée (8) solidaire du premier organe rotatif et une plaque d'appui (9) mobile selon la direction axiale des organes rotatifs et solidaire en rotation du second organe rotatif ;
- un mécanisme d'actionnement (12) comportant un organe d'actionnement (19), mobile en rotation et monté coaxialement aux organes rotatifs;
- un organe (13) de découplage en rotation du mécanisme d'actionnement par rapport aux organes rotatifs ; et
- un organe de conversion d'un couple exercé par l'organe d'actionnement en une force axiale sur la plaque d'appui comportant :
o des rampes (21,25) réalisées sur une face latérale de l'organe d'actionnement (19) et/ou sur une face latérale d'un organe de butée (24) en regard de la face latérale de l'organe d'actionnement ; et
o des organes de réaction (26) disposés pour coopérer avec les rampes de façon à réaliser un déplacement axial de l'organe d'actionnement lors d'une rotation de l'organe d'actionnement (19), l'organe d'actionnement étant agencé pour que le déplacement axial génère une force sur la plaque d'appui de l'embrayage à friction,
ledit dispositif étant **caractérisé en ce que** l'organe de découplage comprend un roulement à billes (13) monté entre la plaque d'appui (9) de l'embrayage à friction et l'organe d'actionnement (19) ; ledit roulement à billes comprenant des billes (13) montées entre une bague intérieure et une bague extérieure comprenant :
- une première demi-bague intérieure (14), solidaire en rotation du second organe rotatif et libre de se déplacer axialement en regard de la plaque d'appui de l'embrayage à friction,
- une seconde demi-bague intérieure (16), solidaire en rotation du second organe rotatif et ayant une surface latérale externe en butée contre le carter,
- une première demi-bague extérieure formée par l'organe d'actionnement (19), et
- une seconde demi-bague extérieure (22) immobile en rotation et reliée à l'organe de butée de l'organe de conversion selon une configuration en U de façon qu'un écartement relatif de la paroi latérale de l'organe d'actionnement portant les rampes, et de la surface de butée entraine un rapprochement des deux demi-bagues extérieures.

2. Dispositif selon la revendication 1, **caractérisé en ce que** les organes de réaction comprennent des billes (26) prenant appui sur les rampes en regard.

3. Dispositif selon l'une des revendications 1 ou 2, **caractérisé en ce que** les deux demi-bagues extérieures (19,22) forment un ensemble flottant selon la direction axiale des organes rotatifs.

4. Dispositif selon l'une des revendications 1 à 3, **caractérisé en ce que** l'organe d'actionnement (19) et l'organe de butée (24) comportent des rampes (21,25) ayant des inclinaisons selon une même direction.

5. Dispositif selon l'une des revendications 1 à 4, **caractérisé en ce que** les rampes (21,25) ont des inclinaisons identiques.

6. Boîte de vitesses comprenant un pignon de sortie (4), **caractérisée en ce que** le pignon de sortie (4) est relié à un organe rotatif (2) d'un dispositif de transmission de couple selon l'une des revendications 1 à 5.

7. Boîte de vitesses selon la revendication 6, **caractérisée en ce que** l'organe d'actionnement (19) est relié à un actionneur (32) ayant une première position pour laquelle l'embrayage à friction est embrayé, et une seconde position pour laquelle l'embrayage à friction est débrayé.

8. Boîte de vitesses selon la revendication 7, **caractérisée en ce que** l'actionneur (32) est commandé par un dispositif (33) de commande séquentielle de la boîte de vitesses.
